(19) Europäisches Patentamt
European Patent Office
Office européen des brevets

(11) **EP 1 761 914 B1**

(12) **EUROPEAN PATENT SPECIFICATION**

(45) Date of publication and mention
of the grant of the patent:
**01.09.2010 Bulletin 2010/35**

(51) Int Cl.:
***G10K 11/168*** (2006.01)

(86) International application number:
**PCT/US2005/019481**

(21) Application number: **05758703.2**

(22) Date of filing: **03.06.2005**

(87) International publication number:
**WO 2006/007275 (19.01.2006 Gazette 2006/03)**

(54) **LOW THICKNESS SOUND ABSORPTIVE MULTILAYER COMPOSITE**

DÜNNER, SCHALLABSORBIERENDER MEHRSCHICHTIGER VERBAND

COMPOSITE MULTICOUCHE D'ABSORPTION SONORE DE FAIBLE EPAISSEUR

(84) Designated Contracting States:
**AT BE BG CH CY CZ DE DK EE ES FI FR GB GR HU IE IS IT LI LT LU MC NL PL PT RO SE SI SK TR**

(30) Priority: **01.07.2004 US 884544**

(43) Date of publication of application:
**14.03.2007 Bulletin 2007/11**

(73) Proprietor: **3M Innovative Properties Company**
**St. Paul, MN 55133-3427 (US)**

(72) Inventors:
• **THOMPSON, Delton R. Jr.**
**3M Center**
**Saint Paul, Minnesota 55133-3427 (US)**

• **LIU, Xiaohe**
**3M Center**
**Saint Paul, Minnesota 55133-3427 (US)**

(74) Representative: **Vossius & Partner**
**Siebertstrasse 4**
**81675 München (DE)**

(56) References cited:
**WO-A-01/40025           WO-A-2004/088025**
**CA-A1- 2 350 477        US-A1- 2003 003 267**
**US-A1- 2003 116 379     US-A1- 2004 023 014**

EP 1 761 914 B1

## Description

### Field of the Invention

This invention relates to sound absorptive multilayer composites, and to precursor components and methods for the preparation or such composites.

### Background

Multilayer composite articles are sometimes used to absorb sound and thereby reduce noise levels in nearby spaces. For example, sound absorptive multilayer composites may be employed in headliners, trunk liners, hood liners, dash mats, interior panels, carpeting and other porous decorative or functional vehicular facing materials to provide enhanced noise reduction in a vehicle interior.

References relating to acoustic insulation, vehicular facings or noise reduction include U.S. Patent Nos. 5,459,291, 5,536,556, 5,549,776, 5,565,259, 5,824,973, 6,145,617, 6,150,287, 6,214,456 B1, 6,217,691 B1, 6,238,507 B1, 6,270,608 B1, 6,296,075 B1, 6,345,688 B1, 6,454,088 B1, 6,575,527 B1, 6,576,577 B1, 6,616,789 B2, 6,631,785 B2 and 6,659,223 B2; U.S. Published Patent Application Nos. US 2001/0036788 A1, US 2003/0003267 A1, US 2003/10479 A1 and US 2004/037995 A1; Canadian Published Application No. 2,350,477 A1; PCT Published Application Nos. WO 99/44817 A1, WO 01/40025 A1 and WO 01/64991 A2; M. Schwartz and E. J. Gohmann, Jr., "Influence of Surface Coatings on Impedance and Absorption of Urethane Foams, J. Acoust. Soc. Am., 34 (4): 502-513 (April, 1962); M. Schwartz and W. L. Buehner, "Effects of Light Coatings on Impedance and Absorption of Open-Celled Foams, J. Acoust. Soc. Am., 35 (10): 1507-1510 (October, 1963); and "Guide to AZDEL SuperLite", publication of AZDEL, Inc. available on the Internet at http://www.azdel.com/documents/Guide%20to%20AZDEL%20SuperLite.pdf.

Canadian Published Application No. 2,350,477 A1 discloses a vehicle roof lining.

An air-permeable support layer comprises a first air-permeable reinforcement layer with a non-air-permeable back layer on the vehicle roof side and a second air-permeable reinforcement layer with an air-permeable decorative layer on the passenger compartment side. The individual layers are interconnected by an air-permeable adhesive. A semipermeable and migration-resistant barrier layer is provided between the second air- permeable reinforcement layer and the decorative layer This barrier layer is designed in such a way as to produce an air-flow resistance of 500Nsm-3 < Rt < 2500Nsm-3, especially of 900Nms-3 < Rt < 900Nsm-3.

### Summary of the Invention

The design of headliners and other sound absorptive multilayer composites requires balancing a number of sometimes competing factors including thickness, weight, acoustic performance and manufacturability. Acoustic performance can be greatly assisted by placing a semipermeable airflow-resistive membrane near the headliner's passenger or occupant side and an air-impermeable film near the headliner's roof or vehicle side. In many current headliner designs this has not been done, and consequently the designs may have suboptimal acoustic performance. By rearranging the layers in some headliner designs or by adding a properly chosen and properly positioned semipermeable airflow-resistive membrane and a properly chosen and properly positioned air-impermeable barrier, we have obtained significant improvements in acoustic performance. Doing so may impose no or a very low additional thickness or weight penalty, and may audibly reduce vehicular interior noise levels. We have developed a sound absorbing headliner design with very simple construction and very low thickness by laminating together a decorative semipermeable airflow-restrictive membrane, an air-permeable reinforcing core and an air-impermeable barrier.

Thus the present invention provides, in one aspect, a sound absorptive multilayer composite according to claim 1.

The invention also provides a method for making a multilayer sound absorptive composite according to claim 10.

These and other aspects of the invention will be apparent from the detailed description below. In no event, however, should the above summaries be construed as limitations on the claimed subject matter, which subject matter is defined solely by the attached claims.

### Brief Description of the Drawing

**Fig.1** is a side sectional view of a disclosed sound absorptive composite.

**Fig. 2** is a side sectional view of another disclosed sound absorptive composite.

**Fig. 3** is a side sectional view of another disclosed sound absorptive composite.

Like reference symbols in the various figures of the drawing indicate like elements. The elements in the drawing are not to scale.

### Detailed Description

When used with respect to a multilayer composite, the phrase "occupant side" refers to a side of the composite that if employed to absorb sound in a vehicle interior would normally be nearest the vehicle occupants. The phrase "vehicle side" refers to a side of the composite that if so employed would normally be furthest from the vehicle occupants.

When used with respect to a layer (e.g., a membrane, adhesive or reinforcing core) of a multilayer sound absorptive composite, the phrase "air-permeable" refers to a layer that can permit the passage of sufficient air through the layer so that the composite can absorb sound in a frequency band of interest in a vehicle interior.

When air permeability values for a component (e.g., a membrane, reinforcing core or barrier) of a multilayer sound absorptive composite are expressed using values in mks Rayls, the recited values may be determined according to ASTM C522 and by measuring the component in place, or carefully removed from, the finished composite. In some instances such values may be deduced or otherwise determined based on the measured airflow resistance of the finished composite or one or more individual or aggregate components.

When used with respect to a barrier, the word "impermeable" refers an air-permeable film, foil or other substantially non-porous article whose airflow resistance is at least about 100,000 $\frac{Ns}{m^3}$ (mks Rayls).

When used with respect to a multilayer composite, the phrase "reinforcing core" refers to a core whose stiffness is such that the composite can not be rolled up or folded over without damage.

When used with respect to a multilayer composite, the word "unitary" refers to a composite whose layers adhere together sufficiently so that the composite can normally be cut to fit as needed and installed in a vehicle without objectionable delamination.

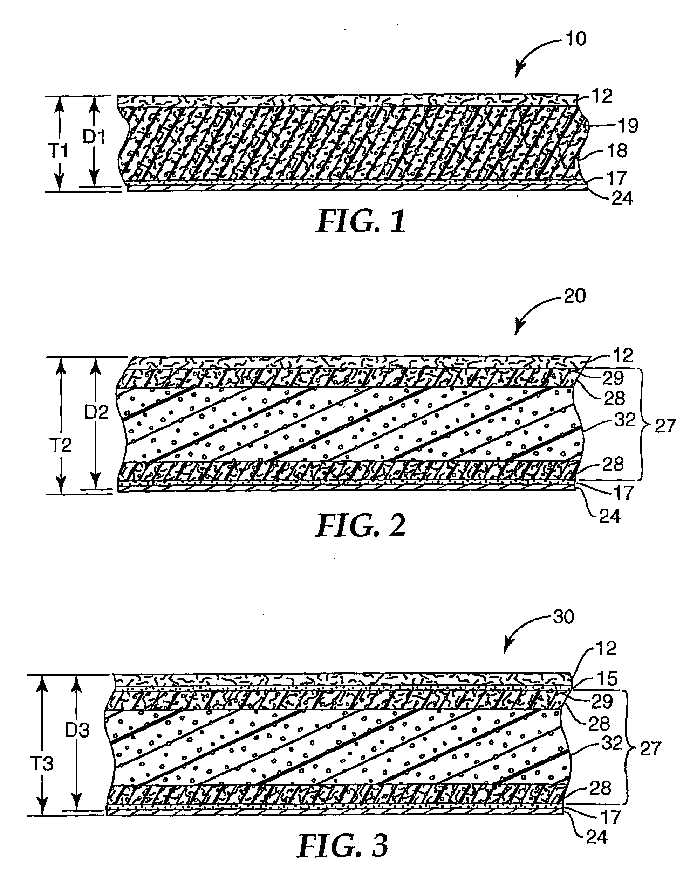

**Fig. 1** is a schematic side sectional view of a multilayer sound absorptive composite **10**. Semipermeable airflow-resistive membrane **12** is colored and textured to provide a decorative appearance, and forms the outermost occupant side layer of composite **10**. Membrane **12** is adhered via flame-lamination to reinforcing core **18**. Core **18** contains a resin-saturated open cell foam structure filled with chopped fiberglass strands **19**. Core **18** is adhered via air-permeable thermoplastic adhesive layer **17** to air-impermeable film barrier **24**. Decorative membrane **12** limits airflow into composite **10** and may have higher airflow resistance per unit of thickness (viz., higher resistivity) than core **18**. Barrier **24** prevents air from flowing through composite **10** and forms the outermost vehicle side layer of composite **10**. The cavity having depth **D1** between the outermost surface of membrane **12** and the innermost surface of barrier **24** forms a sound absorbing space whose acoustic effectiveness is maximized by placing membrane **12** and barrier **24** at opposing outermost surfaces of composite **10** and thus maximizing cavity depth **D1** as a percentage of the overall composite thickness **T1**. Core **18** provides overall stiffness to composite **10,** and enables composite **10 to** span long distances (e.g., vehicular roof areas) without objectionably sagging.

**Fig. 2** is a schematic side sectional view of a multilayer sound absorptive composite **20**. Composite **20** is similar to composite **10** except for its use of reinforcing core **27** in place of core **18** and its somewhat greater cavity depth **D2** and composite thickness **T2** arising from the greater thickness of core **27** compared to core **18**. Core **27** has outer fiberglass mat layers **28** containing strands **29** on either side of central open cell foam layer **32,** forming an "I-beam" structure somewhat analogous to lumber core plywood.

**Fig. 3** is a schematic side sectional view of a multilayer sound absorptive composite **30**. Composite **30** is similar to composite **20** except for its use of an air-permeable thermoplastic adhesive layer **15** between membrane **12** and core **27** and its somewhat greater cavity depth **D3** and composite thickness **T3** arising from the thickness of adhesive layer **15**. Composite **30** may be made without using flame lamination to adhere membrane **12** to core **27**.

A variety of airflow-resistive membranes may be used in the disclosed multilayer composites. The membrane may be formed, for example, from fibrous precursors such as synthetic fibers, natural fibers or blends of synthetic and natural fibers and processed into a nonwoven web using meltblowing, spunbonding or other suitable web processing techniques that will provide a finished semipermeable open structure having an airflow resistance of about 500 to about 4000 $\frac{Ns}{m^3}$ (mks Rayls). The membrane may also be formed from microdenier continuous filament or staple fiber yarns (viz., yarns having a denier per filament (dpf) less than about 1, e.g., between about 0.2 and about 1 dpf) and processed into a woven or knit fabric using suitable processing techniques to provide a finished semipermeable open structure having an airflow resistance of about 500 to about 4000 $\frac{Ns}{m^3}$ (mks Rayls). Preferably the membrane airflow resistance is about 500 to about 2000 $\frac{Ns}{m^3}$ (mks Rayls). The membrane may for example be less than about 1/4 the total composite thickness. Membranes made from microdenier continuous or staple synthetic fibers, and especially synthetic fibers that are split or splittable, may be preferred. Suitable synthetic fibers include multicomponent (e.g., bicomponent) fibers such as side-by-side, sheath-core, segmented pie, islands in the sea, tipped and segmented ribbon fibers. Splitting may be carried out or encouraged using a variety of techniques that will be familiar to those skilled in the art including carding, air jets, embossing, calendering, hydroentangling or needle punching. The membrane is decorative and thus for a headliner may serve as the outermost occupant side layer and may be visible to vehicle occupants. The membrane may be processed in a variety of ways to alter or improve its appearance, tactile properties (e.g., hand), physical properties (e.g., stiffness or drape) and other desired characteristics. Such processing techniques include pigmentation, dyeing, impregnation, immersion, coating, calendering, stretching, embossing, corrugation, brushing, grinding, flocking and other treatments or steps that will be familiar to those skilled in the art. The membrane preferably has an elongation to break sufficient to enable the composite to survive deep cavity molding without objectionable delamination, rupture or adverse permeability changes. A preferred membrane elongation to break is at least about 5% and more preferably at least about 20%. The membrane also preferably has a thermal resistance sufficient to withstand the rigors of the high temperature molding processes that may be employed in manufacturing vehicular headliners and other multilayer sound absorptive composites. Thus it may be preferred to avoid using membranes containing extensive amounts of low-melting polyolefins or other materials that might cause an objectionable air-permeability change (e.g., a substantial decrease) during a molding cycle. The membrane may be treated as described in U.S. Published Patent Application US 2004/0131836 so that it has a low surface energy, e.g., less than that of an adjacent thermoplastic adhesive layer (if employed), for example less than about 3.4 $N/m^2$ (34 dynes/$cm^2$), preferably less than about 3.0 $N/m^2$ (30 dynes/$cm^2$), and more preferably less than about 2.8 $N/m^2$ (28 dynes/$cm^2$). Lightweight membranes having basis weights less than 300 $g/m^2$ are especially preferred, more preferably less than about 200 $g/m^2$ and most preferably from about 100 to about 200 $g/m^2$. Stiff or flexible membranes may be employed. For example, the membrane may have a bending stiffness B as low as 0.005 Nm or less when measured according to ASTM D1388 using Option A - Cantilever Test. The selection and processing of suitable membrane materials will be familiar to those skilled in the art. Representative membranes or fibers for use in such membranes are disclosed in U.S. Patent Nos. 5,459,291, 5,824,973,6,057,256 and 6,145,617; U.S. Published Patent Application Nos. US 2001/0036788 A1 and US 2003/0104749 A1; Canadian Published Application No. 2,350,477 A1; and PCT Published Application No. WO 99/44817 A1. Representative commercially available membranes or fibers include EVOLON™ fabric (commercially available from Freudenberg & Co.); Nos. T-502, T-512 and T-522 segmented splittable bicomponent fibers from Fiber Innovation technology, Inc.; microdenier woven or warp knit fabrics from Guilford Mills, Inc.; splittable bicomponent fibers from Kanebo Ltd., Kuraray Co. Ltd. and Unitika Ltd. and splittable bicomponent fibers and fabrics from Toray Industries, Inc.

A variety of reinforcing cores may be employed in the disclosed composites. As noted above the core has an airflow resistance of at least about 1000 $\frac{Ns}{m^3}$

(mks Rayls). The core may for example have an airflow resistance of about 200 to about 7000 $\frac{Ns}{m^3}$ (mks Rayls).

As also noted above, the core thickness is at least about 2/3 the total composite thickness. Preferably the core is at least about 3/4 the total composite thickness. The core may have higher stiffness (viz., higher modulus), higher density or higher airflow resistance than the membrane. The core preferably has a thermal resistance sufficient to withstand the rigors of the molding process. Thus it may be preferred to avoid using cores containing extensive amounts of low-melting polyolefins or other materials that might cause an objectionable air-permeability change (e.g., a substantial decrease) during a molding cycle. The core may for example have a relatively uniform structure such as is shown in **Fig.1**, or an I-beam construction in which more dense skin layers flank a less dense central layer such as is shown in **Fig. 2** and **Fig. 3**. Suitable cores include those described in U.S. Patent Nos. 5,536,556, 5,549,776, 5,565,259, 6,150,287, 6,214,456 B1 and 6,238,507 B1 and Canadian Published Application No. 2,350,477 A1. Representative commercially available cores include AZDEL SUPERLITE™ composite from Azdel, Inc., UROCORE™ and TRU™ composites from Lear Corp. and ACOUSTICORE™ and POLYBOND™ composites from Johnson Controls, Inc.

A variety of air-impermeable barriers may be employed in the disclosed composites. The barrier may for example have a thickness less than about 2 mm, e.g., less than about 1 mm. Suitable barriers include polymeric films such as polyolefin, polyester or vinyl films and metal foils. One widely-used barrier film that includes an adhesive is INTEGRAL™ 909 adhesive film from Dow Chemical Company.

The membrane, core and barrier are adhered or laminated together to form a unitary composite. Such adhesion or lamination may be accomplished in a variety of ways, and may take place in a single step that addresses all of the layers or in a series of steps that individually address some of the layers. For example, the disclosed sound absorptive multilayer composites may conveniently be made by laying up or applying the individual composite layers in a suitable mold. The layers may be preheated if needed and then compression molded using sufficient heat and pressure to form a unitary composite.

A variety of adhesive measures or adhesive layers may be employed as needed to promote formation of the disclosed unitary composites. For example, the membrane may conveniently be adhered to the core using measures such as compression molding or flame lamination. The core may be adhered to the membrane an barrier using an air-permeable adhesive layer such as a thermoplastic air-permeable adhesive, or by incorporating a suitable polymer in the core (e.g., a thermoplastic urethane) that will form a bond to the membrane or barrier upon heating. Other measures for joining together the various layers and forming a unitary composite will be apparent to those skilled in the art. The finished composite may be air quenched as needed and cut (using, for example, a water jet) to yield the desired completed parts.

A variety of thermoplastic adhesives may optionally be used in the disclosed composites. The multilayer composites may for example contain one or two adhesive layers which may be the same or different. Desirably the adhesive layers will satisfactorily bond together adjacent layers of the composite when processed using typical high temperature molding processes while maintaining adequate air-permeability, and will maintain adequate bonding strength at the expected use temperatures that may be experienced inside a vehicle (e.g., at temperatures of 70° C or more). Preferred adhesives include copolyesters, polyesters, polyurethanes, polyamides, ethylene vinyl acetates, low density polyethylenes, atactic polypropylenes, propylene/1-butene/ethylene terpolymers, and propylene/ethylene, 1-butene/ethylene, 1-butene/propylene copolymers and copolymers of any of the foregoing. Other useful adhesives include those described in U.S. Patent Nos. 3,932,328, 4,081,415, 4,692,370, 5,248,719, 5,869,562 and 6,288,149. The adhesive may also be a low basis weight thermoplastic scrim such as SHARNET™ hot melt adhesive web from Bostik-Findley Company. The selection and processing of such adhesives will largely be familiar to those skilled in the art. It may be noted however that although the completed multilayer composite's sound absorption characteristics will depend in large measure on the known porosity characteristics of the composite's thicker layers (e.g., those of the semipermeable airflow-resistive membrane and reinforcing core), the sound absorption characteristics may also depend a great deal on more process-dependent factors including the manner in which adhesive layers are applied and the chosen composite molding or laminating techniques.

The disclosed composites may consist of or consist essentially of the recited layers. The disclosed composites may include additional interior or exterior layers, coatings, treatments or other elements if desired. For example, the composite may include one or more reinforcing scrim layers, a vehicle side adhesive layer, fire retardant additives or treatments, antennas, and other layers, coatings treatments or elements that will be apparent to those skilled in the art.

The disclosed sound absorptive multilayer composites preferably have a cavity depth that is at least 75%, more preferably at least 90% and most preferably at least 95% of the total composite thickness. For purposes of making this comparison, the cavity depth may be measured from the air-impermeable barrier innermost side to the membrane outermost side, and the total composite thickness may be measured from the composite vehicle side to the composite occupant side.

The disclosed sound absorptive multilayer composites can significantly attenuate sound waves passing into or through an interior of the vehicle. The composite is positioned at an appropriate interior location (e.g., near the roof, pillars, firewall, floor pan or door panels) so that it absorbs sound waves and reduces perceived noise levels.

## Claims

1. A sound absorptive multilayer composite comprising in order:

> a) a semipermeable airflow-resistive decorative single-layer membrane (12) having an airflow resistance of 500 to 4000 $\frac{Ns}{m^3}$,
>
> b) an air-permeable reinforcing core (18, 27) having an airflow resistance of at least 100 $\frac{Ns}{m^3}$ and a thickness at least about 2/3 the total composite thickness, and
> c) an air-impermeable barrier (24).

2. A composite according to claim 1 wherein the composite has a cavity depth at least 90% of the total composite thickness, with the cavity depth being measured from the air-impermeable barrier (24) innermost side to the membrane (12) outermost side.

3. A composite according to claim 1 wherein the membrane has an airflow resistance of 500 to 1500 $\frac{Ns}{m^3}$.

4. A composite according to claim 1 wherein the membrane (12) comprises a nonwoven web.

5. A composite according to claim 1 wherein the membrane (12) comprises knit or woven fabric comprising microdenier yarns.

6. A composite according to claim 1 wherein the membrane (12) comprises multicomponent fibers.

7. A composite according to claim 1 wherein the membrane (12) comprises split or splittable bicomponent fibers.

8. A composite according to claim 1 wherein the core (18, 27) has a thickness at least 3/4 the total composite thickness.

9. A composite according to claim 1 wherein the core (18, 27) has an airflow resistance less than 2000

$$\frac{Ns}{m^3}.$$

10. A method for making a multilayer sound absorptive composite comprising:

    a) providing a stack of layers comprising in order an air-impermeable barrier (24), an air-permeable reinforcing core (18, 27) having an airflow resistance of at least 100 $\frac{Ns}{m^3}$ and a thickness at least about 2/3 the final composite thickness, and a semipermeable airflow-resistive decorative single-layer membrane (12) having an airflow resistance of 500 to 4000 $\frac{Ns}{m^3}$, and

    b) laminating the stack of layers together under sufficient heat and pressure to form a unitary sound absorptive multilayer composite.

**Patentansprüche**

1. Schallschluckender mehrschichtiger Verbund, umfassend in der angegebenen Reihenfolge:

    a) eine semipermeable luftströmungsresistente dekorative einschichtige Membran (12) mit einem Luftströmungswiderstand von 500 bis 4000 Ns/m$^3$,
    b) einen luftdurchlässigen verstärkenden Kern (18, 27) mit einem Luftströmungswiderstand von mindestens 100 Ns/m$^3$ und einer Dicke von mindestens etwa 2/3 der Gesamtdicke des Verbunds und
    c) eine luftundurchlässige Barriere (24).

2. Verbund nach Anspruch 1, wobei der Verbund eine Hohlraumtiefe von mindestens 90% der Gesamtdicke des Verbunds aufweist, wobei die Hohlraumtiefe von der Innenseite der luftundurchlässigen Barriere (24) zur Außenseite der Membran (12) gemessen wird.

3. Verbund nach Anspruch 1, wobei die Membran einen Luftströmungswiderstand von 500 bis 1500 Ns/m$^3$ aufweist.

4. Verbund nach Anspruch 1, wobei die Membran (12) ein Vlies umfaßt.

5. Verbund nach Anspruch 1, wobei die Membran (12) einen Maschen- oder Webstoff, der Mikrodenier-Garne umfaßt, umfaßt.

6. Verbund nach Anspruch 1, wobei die Membran (12) Mehrkomponentenfasern umfaßt.

7. Verbund nach Anspruch 1, wobei die Membran (12) gespaltene oder spaltbare Zweikomponentenfasern umfaßt.

8. Verbund nach Anspruch 1, wobei der Kern (18, 27) eine Dicke von mindestens 3/4 der Gesamtdicke des Verbunds aufweist.

9. Verbund nach Anspruch 1, wobei der Kern (18, 27) einen Luftströmungswiderstand von weniger als 2000 Ns/m$^3$ aufweist.

10. Verfahren zur Herstellung eines mehrschichtigen schallschluckenden Verbunds, bei dem man:

    a) einen Stapel von Schichten, umfassend in der angegebenen Reihenfolge eine luftundurchlässige Barriere (24), einen luftdurchlässigen verstärkenden Kern (18, 27) mit einem Luftströmungswiderstand von mindestens 100 Ns/m$^3$ und einer Dicke von mindestens etwa 2/3 der Gesamtdicke des Verbunds und eine semipermeable luftströmungsresistente dekorative einschichtige Membran (12) mit einem Luftströmungswiderstand von 500 bis 4000 Ns/m$^3$ bereitstellt und
    b) den Stapel von Schichten unter ausreichender Wärme und ausreichendem Druck zur Bildung eines einstückigen schallschluckenden mehrschichtigen Verbunds zusammenlaminiert.

**Revendications**

1. Composite multicouche d'absorption sonore comprenant dans l'ordre :

    a) une membrane à couche simple décorative résistante à l'écoulement de l'air et semi-perméable (12) possédant une résistance à l'écoulement de l'air de 500 à 4000 Ns/m$^3$,
    b) une âme de renforcement perméable à l'air (18, 27) possédant une résistance à l'écoulement de l'air d'au moins 100 Ns/m$^3$ et une épaisseur d'au moins environ les 2/3 de l'épaisseur totale du composite, et
    c) une barrière imperméable à l'air (24).

2. Composite selon la revendication 1, dans lequel le composite possède une profondeur de cavité d'au moins 90 % de l'épaisseur totale du composite, la profondeur de cavité étant mesurée à partir du côté le plus intérieur de la barrière imperméable à l'air (24) jusqu'au côté le plus extérieur de la membrane (12).

3. Composite selon la revendication 1, dans lequel la membrane possède une résistance à l'écoulement de l'air de 500 à 1500 Ns/m$^3$.

4. Composite selon la revendication 1, dans lequel la membrane (12) comprend une bande non tissée.

5. Composite selon la revendication 1, dans lequel la membrane (12) comprend un tissu à mailles ou tissé qui comprend des fils microdeniers.

6. Composite selon la revendication 1, dans lequel la membrane (12) comprend des fibres multicomposants.

7. Composite selon la revendication 1, dans lequel la membrane (12) comprend des fibres à deux composants clivées ou clivables.

8. Composite selon la revendication 1, dans lequel l'âme (18, 27) possède une épaisseur d'au moins les 3/4 de l'épaisseur totale du composite.

9. Composite selon la revendication 1, dans lequel l'âme (18, 27) possède une résistance à l'écoulement de l'air inférieure à 2000 Ns/m$^3$.

10. Procédé de fabrication d'un composite multicouche d'absorption sonore comprenant :

   a) la fourniture d'une pile de couches comprenant, dans l'ordre, une barrière imperméable à l'air (24), une âme de renforcement perméable à l'air (18, 27) possédant une résistance à l'écoulement de l'air d'au moins 100 Ns/m$^3$ et une épaisseur d'au moins environ les 2/3 de l'épaisseur finale du composite, et une membrane à couche simple décorative résistante à l'écoulement de l'air et semi-perméable (12) possédant une résistance à l'écoulement de l'air de 500 à 4000 Ns/m$^3$, et
   b) la stratification de la pile de couches ensemble sous une chaleur et une pression suffisantes pour former un composite multicouche d'absorption sonore unitaire.

FIG. 1

FIG. 2

FIG. 3

**EP 1 761 914 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5459291 A
- US 5536556 A
- US 5549776 A
- US 5565259 A
- US 5824973 A
- US 6145617 A
- US 6150287 A
- US 6214456 B1
- US 6217691 B1
- US 6238507 B1
- US 6270608 B1
- US 6296075 B1
- US 6345688 B1
- US 6454088 B1
- US 6575527 B1
- US 6576577 B1
- US 6616789 B2
- US 6631785 B2

- US 6659223 B2
- US 20010036788 A1
- US 20030003267 A1
- US 200310479 A1
- US 2004037995 A1
- CA 2350477 A1
- WO 9944817 A1
- WO 0140025 A1
- WO 0164991 A2
- US 20040131836 A
- US 6057256 A
- US 20030104749 A1
- US 3932328 A
- US 4081415 A
- US 4692370 A
- US 5248719 A
- US 5869562 A
- US 6288149 B

**Non-patent literature cited in the description**

- **M. Schwartz ; E. J. Gohmann, Jr.** Influence of Surface Coatings on Impedance and Absorption of Urethane Foams. *J. Acoust. Soc. Am.,* April 1962, vol. 34 (4), 502-513

- **M. Schwartz ; W. L. Buehner.** Effects of Light Coatings on Impedance and Absorption of Open-Celled Foams. *J. Acoust. Soc. Am.,* October 1963, vol. 35 (10), 1507-1510